Europäisches Patentamt

European Patent Office

Office européen des brevets

(19)

(11) Veröffentlichungsnummer : **0 198 200**
**B1**

(12) # EUROPÄISCHE PATENTSCHRIFT

(45) Veröffentlichungstag der Patentschrift :
07.06.89

(51) Int. Cl.⁴ : **B 60 T 8/18**

(21) Anmeldenummer : 86102967.6

(22) Anmeldetag : 06.03.86

(54) Lastabhängiger Bremskraftregler.

(30) Priorität : 13.04.85 DE 3513289

(43) Veröffentlichungstag der Anmeldung :
22.10.86 Patentblatt 86/43

(45) Bekanntmachung des Hinweises auf die Patenterteilung : 07.06.89 Patentblatt 89/23

(84) Benannte Vertragsstaaten :
**DE FR GB IT NL SE**

(56) Entgegenhaltungen :
**EP–A– 0 052 877**
**EP–A– 0 058 413**
**DE–A– 2 626 723**
**DE–A– 2 655 546**
**DE–A– 2 817 302**
**FR–A– 2 279 592**
**US–A– 4 243 273**

(73) Patentinhaber : **ROBERT BOSCH GMBH**
**Postfach 50**
**D-7000 Stuttgart 1 (DE)**

(72) Erfinder : **Gassmann, Heiner**
**Jakobstrasse 3**
**D-7300 Esslingen 1 (DE)**

EP 0 198 200 B1

## Beschreibung

### Stand der Technik

Die Erfindung bezieht sich auf einen lastabhängigen Bremskraftregler nach der Gattung des Hauptanspruchs.

Ein derartiger Bremskraftregler ist bekannt (DE-A-2 435 779). Bei dieser bekannten Bauart ist eine Sinterscheibe verwendet, um den Druck vom Federbalg zu vermindern. Der begrenzte Druck ist bei intakter Luftfederungsanlage unwirksam, bei Ausfall des Luftfederdruckes greift der begrenzte Druck am Stellkolben an, indem ein aus Schließkörper und Sitz bestehendes Ventil umschaltet. Im Schadensfall müssen aber beide Kolben, der Stellkolben und der Schaltkolben einen Hub machen.

Der Erfindung liegt die Aufgabe zugrunde, diesen Nachteil zu vermeiden und einen Bremskraftregler der eingangs genannten Bauart zu schaffen, der bei Ausfall weniger störanfällig ist, ohne daß ein Mehraufwand getrieben werden muß.

Diese Aufgabe wird gemäß der Erfindung bei einem gattungsgemäßen Bremskraftregler durch die kennzeichnenden Merkmale des Patentanspruches gelöst.

### Zeichnung

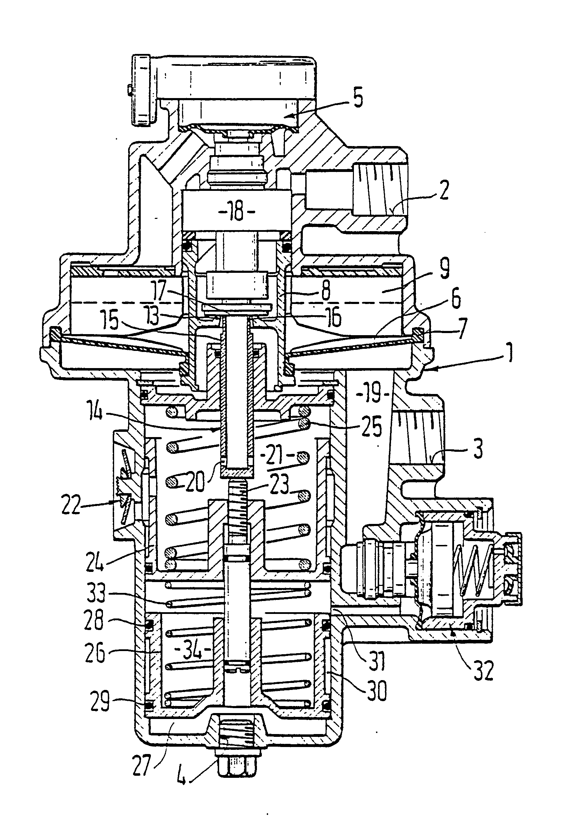

Ein Ausführungsbeispiel der Erfindung ist in der Zeichnung dargestellt und in der nachfolgenden Beschreibung näher erläutert.

### Beschreibung des Ausführungsbeispieles

In einem zweiteiligen Gehäuse 1 befinden sich ein Anschluß 2 für eine von einem Bremsventil herangeführten Leitung, ein Anschluß 3 für eine Leitung zu den Radbremszylindern führende und ein Anschluß 4 für eine von zwei Luftfederbälgen herangeführte Leitung. Oben auf dem Gehäuse 1 sitzt ein sogenanntens Einsprungventil 5, dessen Aufbau an sich bekannt ist. Zwischen den Gehäuseteilen ist eine mit einem Ringwulst 7 versehene Membran 6 eingespannt; der innere Ringrand der ringförmigen Membran 6 ist an einem Membrankolben 8 festgelegt. Die Membran 6 arbeitet in an sich bekannter Weise mit radialen Abstützungen 9 derart zusammen, daß ihre Wirkfläche veränderlich ist, je nachdem wie hoch der Kolben 8 im Gehäuse 1 steht. Der Kolben 8 trägt einen Einlaß-Ventilsitz 13, und in den Kolben 8 ragt ein hohler Stößel 14 hinein, der an seinem oberen Ende 15 einen Auslaß-Ventilsitz 16 trägt. Mit beiden Ventilsitzen 13 und 16 arbeitet ein Schließkörper 17 zusammen. Auf diese Weise ist zwischen einem Eingangsraum 18 und einem Ausgangsraum 19 ein doppelsitziges Steuerventil 13, 16, 17 gebildet. Der Raum 18 steht in Verbindung mit dem Anschluß 2, und der Raum 19 hat den Anschluß 3. Das Doppelsitzventil 13, 16, 17 bildet ein Durchgangsventil, über das die Anschlüsse 2 und 3 miteinander verbindbar sind. Der hohle Stößel 14 hat einen Radialdurchbruch 20, der in einen Federraum 21 führt, der über ein Rückschlagventil 22 an Aussenluft angeschlossen ist.

Unter dem Stößel 24 liegt ein Gewindestift, der in einen Teilkolben 24 eingeschraubt ist, der als Stellkolben für das Steuerventil 13, 16, 17 arbeitet. Er unterliegt der Kraft einer Reglerfeder 25, die bestrebt ist, ihn nach unten zu drücken in eine Stellung, in der das Steuerventil 13, 16, 17 den Raum 19 mit der Außenluft verbindet.

Unter dem Stellkolben 24 liegt ein zweiter Teilkolben 26, der als Schaltkolben arbeitet. Dieser Schaltkolben 26 begrenzt als bewegliche Wand eine Kammer 27, die über den Anschluß 4 unter Luftfederbalgdruck steht. Er trägt an seiner Mantelfläche zwei Dichtringe 28 und 29, die zwischen sich einen Ringraum 30 einschließen, und unterliegt der Kraft einer Feder 33, die bestrebt ist, ihn nach unten zu drücken. Zwischen dem Stellkolben 24 und dem Schaltkolben 26 ist eine die Feder 33 aufnehmende Kammer 34 gebildet.

In Höhe des Schaltkolbens 26 ist im unteren Gehäuseteil ein Radialdurchbruch 31 vorgesehen, der zu einem Druckbegrenzer 32 führt. Der Druckbegrenzer 32 ist auf nicht dargestellte Weise mit dem Anschluß 3 verbunden und hat die Aufgabe, den an den Anschluß 3 zu den Bremsen abgegebenen Druck abzuzweigen und zu Steuerzwecken im Bremskraftregler zu verwenden und zu begrenzen.

### Wirkungsweise

Bei intakter Luftfederungsanlage herrscht in der Kammer 27 der Luftfederbalgdruck von etwa 6,5 bar. Der Schaltkolben 26 liegt an dem Stellkolben 24 an, die Feder 33 ist zusammengedrückt. Die Reglerfeder 25 wird durch den Luftfederdruck auf eine Länge zusammengedrückt, die der Fahrzeuglast entspricht. Infolge dessen nimmt der Stößel 14 eine Lage ein, in der die veränderliche Membran-Wirkfläche entsprechend ausgewogen ist.

Der Kanal 31 wird von den zwei Dichtringen 28 und 29 so überdeckt, daß er mit dem Ringraum 30 verbunden ist. Auf diese Weise ist der vom Druckbegrenzer 32 begrenzte Bremsdruck im Ringraum 30 wirkungslos eingekammert.

Wird gebremst, so gelangt Bremsdruck in den Raum 18, wird in an sich bekannter Weise vom Steuerventil 13, 16, 17 lastabhängig abgeregelt und erreicht über den Anschluß 3 die Bremsen.

Fällt der Luftfederdruck ab und erreicht er einen Wert von etwa 0,5 bar, dann bleibt der Stellkolben 24 nach einem gewissen Abwärtshub stehen und die Feder 33 dehnt sich aus, so daß sich der Schaltkolben 26 vom Stellkolben 24 löst. Dann überfährt die Dichtung 28 den Radialdurchbruch 31, so daß letzterer mit der Kammer 34 in Verbindung gelangt.

Der vom Druckbegrenzer 32 begrenzte Druck strömt in die Kammer 34 und drückt den Stellkolben 24 in eine Stellung, die der Halbbeladen-Stellung des Bremskraftreglers entspricht. Es ist also festzuhalten, daß der Bremskraftregler beim Absinken des Luftfederbalgdruckes auf einen bestimmten Wert, oder bei Ausfall in eine definierte Mittelstellung geht. Dabei kann diese Mittelstellung durch Einstellung des Begrenzungsdruckes am Druckbegrenzer 32 variiert werden.

Wenn die Luftfederungsanlage repariert ist, nehmen alle Teile des Bremskraftreglers wieder ihre Ausgangsstellung ein.

## Patentansprüche

1. Lastabhängiger Bremskraftregler für Druckluftbremsen bei Fahrzeugen, mit einem Anschluß (2) für eine Leitung zu einem Bremsventil und einem Anschluß (3) für eine Leitung zum Radbremszylinder und mit einem Steuerkolben (6, 8), dessen eine Seite über den einen Anschluß unter dem Steuerdruck des Bremsventils und dessen andere Seite unter dem Einfluß einer wirkflächenveränderlichen Membran (6) stehen, wobei im Steuerkolben (6, 8) ein Steuerventil (13, 16, 17) angeordnet ist, dessen Ventilschließglied (17) über einen durch einen Regler-Kolben (24, 26) verstellbaren Stößel (14) vom Ventilsitz (13) abhebbar ist, wobei der Regler-Kolben (24, 26) zweiteilig ist und der eine, dem Steuerventil (13, 16, 17) benachbarte Teil des Regler-Kolbens (24, 26) einen Stellkolben (24) und der andere, unmittelbar einem Luftfederbalgdruck unterliegende Teil des Regler-Kolbens (24, 26) einen Schaltkolben (26) bilden, dadurch gekennzeichnet, daß der Schaltkolben (26) des Reglers-Kolbens (24, 26) als Schieberkolben ausgebildet ist und zwischen zwei Dichtungen (28, 29) einen über einen Druckbegrenzer (32) begrenzten Druck bei intakter Luftfederungsanlage unwirksam einkammert und bei Druckabfall des Luftfederbalgdruckes einen Schaltweg macht und den begrenzten Druck unmittelbar am Stellkolben (24) angreifen läßt.

2. Bremskraftregler nach Anspruch 1, dadurch gekennzeichnet, daß der vom Druckbegrenzer (32) zu begrenzende Druck der Bremsdruck ist und daß der begrenzte Druck maßgebend ist für die Stellung des Stellkolbens (24) im Bremskraftregler.

3. Bremskraftregler nach Anspruch 2, dadurch gekennzeichnet, daß der begrenzte Druck dem Stellkolben (24) eine Mittelstellung zwischen Leer- und Vollast erteilt.

4. Bremskraftregler nach Anspruch 2 oder 3, dadurch gekennzeichnet, daß die Höhe des begrenzten Druckes und damit die jeweilige Last-Zwischenstellung am Druckbegrenzer (32) einstellbar ist.

## Claims

1. Load-sensitive braking power regulator for pressurized pneumatic brakes of vehicles, having a connector (2) for a line to a braking valve and a connector (3) for a line to the wheel brake cylinder and having a control piston (6, 8), one side of which is subject through the one connector to the control pressure of the braking valve and the other side of which is subject to the influence of a diaphragm (6) of variable effective surface, a control valve (13, 16, 17) being arranged in the control piston (6, 8), the valve closure element (17) of which is raiseable from the valve seat (13) by a push rod (14) adjustable by a regulator piston (24, 26), the regulator piston (24, 26) being two-part and the one part of the regulator piston (24, 26) adjacent to the control valve (13, 16, 17) forming an adjusting piston (24) and the other part of the regulator piston (24, 26) which is directly subject to a pneumatic spring bellows pressure forming a switch piston (26), characterized in that the switch piston (26) of the regulator piston (24, 26) is constructed as a slide piston and encloses between two seal elements (28, 29) a pressure limited by a pressure relief valve (32) so as to be ineffective in an intact pneumatic suspension installation and in the case of a pressure decrease of the pneumatic spring bellows pressure, executes a switching stroke and allows the limited pressure to engage the adjusting piston (24) directly.

2. Braking power regulator according to Claim 1, characterized in that the pressure to be limited by the pressure relief valve (32) is the braking pressure and that the limited pressure is decisive of the position of the adjusting piston (24) in the braking power regulator.

3. Braking power regulator according to Claim 2, characterized in that the limited pressure allocates a central position between no-load and full-load to the adjusting piston (24).

4. Braking power regulator according to Claim 2 or 3, characterized in that the level of the limited pressure, and therefore the respective intermediate load position, is adjustable at the pressure relief valve (32).

## Revendications

1. Régulateur de pression de frein en fonction de la charge, pour des freins à air comprimé destinés à des véhicules automobiles, avec un raccordement (2) pour une conduite allant à une soupape de frein et un raccordement (3) pour une conduite allant à un cylindre de frein de roue, et avec un piston de commande (6, 8), dont un côté est placé sous la pression de commande de la soupape de frein, par un raccordement, et dont l'autre côté est placé sous l'influence d'une membrane à section efficace variable (8), une soupape de commande (13, 16, 17) étant disposée dans le piston de commande (6, 8), soupape de commande dont l'organe d'obturation de soupape (17) est susceptible de se soulever du siège de soupape (13) par un poussoir (14) réglable par un piston-régulateur (24, 26), le piston de réglage (24, 26) étant en deux parties et l'une, la partie du piston de commande (24, 26) voisine de la soupape de commande (13, 16, 17) formant un piston de réglage (24), et l'autre, la partie du piston-régulateur (24, 26) directement soumise à une pression du soufflet de suspension pneumatique, formant un piston de commutation (26), caractérisé en ce que le piston de commutation (26) du piston-régulateur (24, 26) est réalisé sous forme de piston à tiroir et entre deux étanchéités (28, 29), une pression limitée par un limiteur de pression (32) par chambre unique de manière inefficace, lorsque l'installation de suspension pneumatique est intacte et établit une voie de commutation en cas de chute de pression de la pression de soufflet de suspension pneumatique, et laisse agir la pression limitée directement sur le piston de commande (24).

2. Régulateur de pression de frein selon la revendication 1, caractérisé en ce que la pression à limiter par le limiteur de pression (32) est la pression de freinage et en ce que la pression limitée est représentative pour la position du piston de commande (24) situé dans le régulateur d'effort de freinage.

3. Régulateur de frein selon la revendication 2, caractérisé en ce que la pression limitée communique au piston de commande (24) une position intermédiaire, entre charge à vide et pleine charge.

4. Régulateur de frein selon la revendication 2 ou 3, caractérisé en ce que la valeur de la pression limitée et ainsi chaque position intermédiaire de charge est réglable sur le limiteur de pression (32).